# EUROPÄISCHE PATENTSCHRIFT

(11) **EP 1 339 556 B1**
(45) Veröffentlichungstag und Bekanntmachung des Hinweises auf die Patenterteilung: **16.02.2011**
(21) Anmeldenummer: 01976024.8
(22) Anmeldetag: 11.09.2001
(51) Int. Cl.: B60G 11/26, B60G 13/00, B60G 15/14, B60G 13/18

(54) **GAS-FEDER-DÄMPFEREINHEIT**
GAS-SPRING DAMPER
ENSEMBLE AMORTISSEUR A RESSORT A PRESSION DE GAZ

(30) Priorität: 14.09.2000 DE 10045403
(43) Veröffentlichungstag der Anmeldung: 03.09.2003
(73) Patentinhaber: ContiTech Luftfedersysteme GmbH, 30165 Hannover (DE)
(72) Erfinder: GOLD, Hennig, 55452 Dorsheim (DE); BRAUN, Patrik, 55130 Mainz (DE)
(74) Vertreter: Schneider, Henry
(86) Internationale Anmeldenummer: PCT/DE2001/003480
(87) Internationale Veröffentlichungsnummer: WO 2002/022385

(56) Entgegenhaltungen:
- US-A- 3 395 931
- US-A- 4 742 996
- US-A- 6 116 584

## Beschreibung

Die Erfindung bezieht sich auf eine Gas-Feder-Dämpfereinheit nach dem Oberbegriff des Anspruchs 1.

Derartige Dämpfereinheiten werden immer dort eingesetzt, wo in zwei entgegengesetzten Richtungen Bewegungsenergie verbraucht werden muss. Vorzugsweise werden diese Dämpfereinheiten in der Fahrzeugindustrie zum Beispiel bei der Aufhängung von Vorder- und Hinterräder oder bei schwingenden LKW-Fahrersitzen verwendet.

Gas-Feder-Dämpfereinheiten sind grundsätzlich bekannt, wobei man unterscheidet zwischen einer Dreiraum-Gas-Feder-Dämpfereinheit mit einem die Last tragenden Federraum und zwei gegenüberliegenden Dämpferräumen sowie einer Zweiraum-Gas-Feder-Dämpfereinheit mit einem kombinierten Feder-Dämpferraum einerseits und einem Dämpferraum andererseits.

Eine Zweiraum-Gas-Feder-Dämpfereinheit ist beispielsweise in der DE 36 41 623 C2 beschrieben. Diese Gas-Feder-Dämpfereinheit ist für eine Radaufhängung an einem Kraftfahrzeug ausgelegt und besteht in der Hauptsache aus einem Zylindergehäuse und einem in diesem Zylindergehäuse verschiebbar geführten Kolben, der mit Hilfe eines am Umfang befindlichen Dichtelementes das Zylindergehäuse in den beim Einfedern kleiner werdenden Feder-Dämpferraum und in den beim Einfedern größer werdenden Dämpferraum aufteilt. Der Kolben besitzt ein Drosselorgan zum Ausgleich des Gases zwischen dem kombinierten Feder-Dämpferraum und dem gegentiberliegenden Dämpferraum während der Bewegung des Kolbens und ist starr mit einer Kolbenstange verbunden. Zwischen dieser Kolbenstange und dem Zylindergehäuse ist ein Rollbalg befes tigt, der den Bewegungen der Kolbenstange folgt und der den Federraum nach außen druckdicht verschließt.

Diese Gas-Feder-Dämpfereinheit ist im Fahrzeug so angeordnet, dass das Zylindergehäuse mit seiner Kolbenseite starr bzw. akustisch isoliert am Aufbau des Fahrzeuges befestigt ist und die Kolbenstange mit einem Befestigungsauge an einem Radführungselement des Fahrzeuges drehbeweglich angelenkt ist. Mit dieser Ausbildung und mit dieser Anordnung besitzt die Gas-Feder-Dämpfereinheit alle axialen und radialen Freiheiten, die Relativbewegungen zwischen dem Fahrzeugaufbau und dem Rad in der vertikalen und in allen horizontalen Ebenen auszugleichen.

Diese Gas-Feder-Dämpfereinheit hat aber einen wesentlichen Nachteil. So gibt es bei größeren Schrägstellungswinkeln des Kolbens Probleme mit der Dichtigkeit zwischen der feststehenden Wand des Zylindergehäuses und den axial und radial überlagerten Bewegungen des Kolbens. Diese Undichtigkeiten sind aber gerade sehr schädlich, weil sie das allein durch das Drosselorgan zu bestimmende Dämpfungsverhalten der Gas-Feder-Dämpfereinheit beeinflusst und verfälscht. Das ist ein Sicherheitsrisiko für das Fahrzeug und kann nicht geduldet werden. Es sind daher in fertigungstechnischer Hinsicht verstärke Bemühungen unternommen worden, dieses Dichtverhalten zu verbessern. So ist in der genannten DE 36 41623 C2 der Kolben als ein Pilzkolben mit einer Umfangsnut ausgebildet. In diese Umfangsnut ist ein spezieller und flexibler Dichtring fest eingesetzt, der sich der Bewegung des Kolbens folgend stets an die Form des Kolbens anpasst. Zur Verbesserung des Gleitverhaltens ist dieser Dichtring auf der Seite des Zylindergehäuses mit einem Gleitdichtring ausgerüstet. Diese Dichtvariante ist aber nur bei geringen Schrägstellungswinkeln des Kolbens ausreichend funktionssicher. Außerdem ist diese Dichtvariante in der Herstellung sehr aufwendig und damit in der Anwendung unvertretbar teuer.

Ein weiterer Nachteil der Schwenkbewegung in den Endlagen ist eine sich daraus ergebende Vergrößerung der Baulänge.

Der Erfindung liegt daher die Aufgabe zu Grunde, die Schwenkbewegungen der Kolbenachse zur Zylinderachse einer gattungsgemäßen Zweiraum-Gas-Feder-Dämpfereinheit zu verringern.

Diese Aufgabe wird durch die kennzeichnenden Merkmale des Anspruches 1 gelöst, wonach zwischen dem Aufbau des Fahrzeuges und dem Drehgelenk an der Schwinge ein zweites Drehgelenk vorgesehen ist. Beide Drehgelenke sind über ein Pleuel miteinander verbunden. Der Rollbalg besitzt eine solche veränderliche druckwirksame Kontaktfläche zur Kolbenstange, die dem Kolben in jeder Hubposition ein stabiles Kräftegleichgewicht garantiert.

Zweckdienliche Ausgestaltungsmöglichkeiten ergeben sich aus den Unteransprüchen 2 bis 8.

Die Erfindung beseitigt die genannten Nachteile des Standes der Technik.

Dabei liegt der besondere Vorteil in der Minimierung der schwenkenden Bewegung des Kolbens gegenüber dem Zylindergehäuse, wodurch die Dichtvariante am Kolben konstruktiv und fertigungstechnisch einfach ausführbar ist und damit erhebliche Kosten eingespart werden. Gleichzeitig verbessert sich das Dichtverhalten. Dadurch werden die Bewegungsabläufe an der Gas-Feder-Dämpfereinheit definierter und die Fahrsicherheit erhöht. Die neue Gas-Feder-Dämpfereinheit verkürzt sich auch in ihrer Baulänge, was bei allen Anwendungsmöglichkeiten von außerordentlicher Bedeutung ist.

Die Erfindung ermöglicht zwei Varianten der praktischen Umsetzung. So kann das zweite Drehgelenk zwischen dem Aufbau des Fahrzeuges und dem Zylindergehäuse angeordnet werden, wenn dabei das Zylindergehäuse mit einem äußeren Zylinder für die Abstützung des Rollbalges ausgerüstet wird. Diese Variante kann für einige Anwendungsfälle von besonderer Bedeutung sein.

Es ist aber zweckmäßig, das zweite Drehgelenk im Kolben anzuordnen und die Kolbenstange des Kolbens als einen hohlförmigen Abrollkolben auszubilden, der das zweite

Drehgelenk und das Pleuel aufnimmt und zur Befestigung des Rollbalges dient. Diese Variante bringt bei den überwiegenden Anwendungsfällen Vorteile und ist auch einfach in der Herstellung und in der praktischen Umsetzung.

Es ist von Vorteil, wenn das zweite Drehgelenk am Kolben im Kreuzungspunkt zwischen der Ebene des Kolbendichtelementes und der Bewegungsachse des Kolbens angeordnet wird. Das verringert die Gefahr von unzulässigen Kippmomenten.

Es kann aber auch für ausgewählte Anwendungsfälle sinnvoll sein, das zweite Drehgelenk neben diesen Kreuzungspunkt vorzusehen, um dem Kolben in eine ausgewählte Richtung einem vorbestimmten Moment auszusetzen. Damit kann möglicherweise anderen auf den Kolben wirkenden Kräften entgegengewirkt werden.

Es ist weiterhin zweckmäßig, wenn die Lage der Gas-Feder-Dämpfereinheit so gewählt wird, dass die Tangente an die Bahnkurve des Drehgelenkes der Schwinge in Mittellage parallel und nahe der Bewegungsachse des Kolbens liegt. Dadurch werden radiale Kraftkomponenten und damit tangentiale Reibkräfte minimiert, die Kippbewegungen am Kolben hervorrufen.

Zur Verlagerung des Drehgelenkes der Schwinge in der genannten Art kann die Schwinge in diesen Bereich dornartig ausgebildet sein oder mit einem Lagerfuß ausgerüstet sein.

Für bestimmte Anwendungsfälle ist es vorteilhaft, wenn die domartige Schwinge oder der Lagerfuß der Schwinge und der Abrollkolben als gegenseitige Anschlagelemente ausgelegt sind. Dann arbeitet die Gas-Feder-Dämpfungseinheit bis zum Anschlag des Lagerfußes am Abrollkolben erfingdungsgemäß und danach herkömmlich.

Mit der Möglichkeit, beide Drehlager einzeln oder zusammen eben oder räumlich auszuführen, kann die Gas-Feder-Dämpfereinheit an die unterschiedlichsten Anwendungsfälle angepasst werden.

Die Erfindung soll anhand eines Ausführungsbeispieles näher erläutert werden.

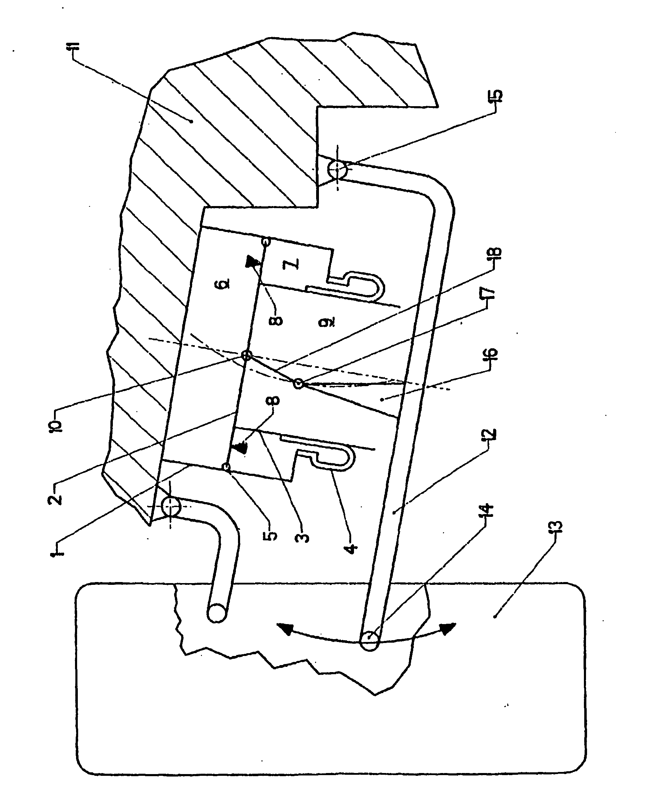

Dazu zeigt die einzige Figur eine überwiegend schematische Darstellung einer Gas-Feder-Dämpfereinheit und ihre Anordnung zwischen dem Aufbau und der Radaufhängung eines Fahrzeuges.

Danach besteht die Gas-Feder-Dämpfereinheit aus einem Zylindergehäuse 1 und einem Kolben 2, der innerhalb des Zylindergehäuses 1 axial verschiebbar geführt ist, und einem Abrollkolben 3, der fest mit dem Zylinderkolben 2 verbunden ist und der das Zylindergehäuse 1 abrollkolbenseitig durchdringt. Zwischen dem Abrollkolben 3 und der entsprechenden Seite des Zylindergehäuses 1 befindet sich ein Rollbalg 4, der grundsätzlich die gleichen Funktionen wie in einer bekannten Gas-Feder-Dämpfungseinheit erfüllt und der aus einem strapazierfähigen und flexiblen Material besteht und sowohl am Zylindergehäuse 1 als auch am Umfang des Abrollkolbens 3 befestigt ist. Dabei besitzt der Rollbalg 4 eine druckwirksame Kontaktfläche X' einerseits und eine druckwirksame Kontaktfläche X" andererseits zum Abrollkolben 3, die sich beim Ausschwenken unterschiedlich verändern und im Zusammenhang mit dem Innendruck eine Querkraft produzieren, die dem Ausschwenken entgegenwirkt und zum Ausgleich der am Kolben 2 auftretenden Querkräfte und entsprechenden Reibkräfte in der Lage ist. Am Umfang des Kolbens 2 ist ein Kolbendichtelement 5 eingesetzt, das den Innenraum des Zylindergehäuses 1 in einen oberen Feder-Dämpferraum 6 und im Zusammenspiel mit dem Rollbalg 4 in einen unteren Dämpferraum 7 aufteilt. Der obere Feder-Dämpferraum 6 und der untere Dämpferraum 7 sind über ein in beiden Richtungen unterschiedlich oder auch gleichartig wirkendes Drosselelement 8 verbunden. Der Abrollkolben 3 ist rohrförmig ausgebildet und besitzt demnach im Zusammenwirken mit dem Kolben 2 einen topfförmigen Innenraum 9, der auf der vom Kolben 2 abgewandten Seite offen gehalten ist. Im Kolben 2 ist auf der Abrollkolbenseite eine nicht dargestellte mittige Ausnehmung eingelassen, die auf den Innenraum 9 des Abrollkolbens 3 abgestimmt ist und die sich bis über die radiale Ebene des Kolbendichtelementes 5 erstreckt. In dieser Ausnehmung ist ein Drehgelenk 10 angeordnet, das sich genau auf der Ebene des Kolbendichtelementes 5 und auf der linearen Bewegungsachse des Kolbens 2 befindet.

Das Zylindergehäuse 1 ist auf der Seite des Kolbens 2 an einer bevorzugten Stelle in herkömmlicher Weise starr mit dem Aufbau 11 des Fahrzeuges verbunden. Auf der Seite des Abrollkolbens 3 ist der Kolben 2 in besonderer Weise an einer Schwinge 12 befestigt, die den Aufbau 11 des Fahrzeuges mit der Radaufhängung eines Rades 13 mechanisch verbindet und die dazu über ein Drehgelenk 14 an der Radaufhängung des Rades 13 und über ein Drehgelenk 15 am Aufbau 11 des Fahrzeuges angelenkt ist. Zwischen diesen beiden Drehgelenken 14 und 15 ist die Schwinge 12 mit einem Lagerfuß 16 ausgestattet. Dieser Lagerfuß 16 befindet sich an einer Stelle, die einen bevorzugten Hebelarm gegenüber dem Drehgelenk 15 am Aufbau des Fahrzeuges ergibt und erstreckt sich in besonderer Weise in Richtung des Kolbens 2. Am Ende des Lagerfußes 16 befindet sich ebenfalls ein Drehgelenk 17, das über ein Pleuel 18 mit dem Drehgelenk 10 des Kolbens 2 verbunden ist. Durch die Wahl der Länge des Lagerfußes 16 und durch die Wahl des radialen Abstandes des Drehgelenkes 17 an der Schwinge 12 vom Drehgelenk 15 am Fahrzeug wird der radiale Schwenkbereich des Drehgelenkes 17 an der Schwinge 12 gegenüber der Bewegungsachse des Kolbens 2 bestimmt. Dieser radiale Schwenkbereich beeinflusst die Schrägstellung des Pleuels 18 zur Zylinderachse und somit die Größe der auf den Kolben 2 wirkenden Querkraft und Reibkraft.

Gas-Feder-Dämpfereinheiten haben die Aufgabe, von der Fahrbahn ausgehende Schwingbewegungen des Aufbaus 11 gegenüber den Rädern 13 so abzudämpfen, dass die Abwärtsbewegung des Aufbaus 11 als sanft empfunden wird und die Aufwärtsbewegung des Aufbaus 11 die Räder 13 in der Bodenhaftung belässt.

Insofern drehen der Aufbau 11 des Fahrzeuges mit dem feststehenden Zylindergehäuse 1 einerseits und die Schwinge 12 mit dem feststehenden Lagerfuß 16 andererseits um das gemeinsame Drehgelenk 15. Dabei bewegt sich das untere Drehgelenk 17 auf einer Kreisbahn um das Drehgelenk 15 und das obere Drehgelenk 10 des Kolbens 2 auf der linearen Bewegungsbahn des Kolbens 2.

Da nach dem bekannten Prinzip des Kurbeltriebs auf das obere Drehgelenk 10 am Kolben 2 eine vertikale, auf der Bewegungsachse des Kolbens 2 liegende Kraftkomponente und gleichzeitig eine horizontale, quer zur Bewegungsachse des Kolbens 2 ausgerichtete zweite Kraftkomponente wirken und der Kolben 2 im Zylindergehäuse 1 nicht klemmfrei geführt ist, befindet sich der Kolben 2 in einem indifferenten Gleichgewicht. Die horizontal auf das obere Drehgelenk 10 am Kolben 2 wirkende Kraftkomponente erzeugt eine Reibkraft, die den Kolben 2 und damit auch den Abrollkolben 3 zum Schwenken bringt. Dadurch wird auch der Rollbalg 4 unterschiedlich zusammengedrückt, was zu unterschiedlich großen Kontaktflächen X' einerseits und X" andererseits am Rollbalg 4 führt. Diese unterschiedlichen und gegenüberliegenden Kontaktflächen X', X" bewirken durch den Innendruck unterschiedliche auf den Abrollkolben 3 wirkende Gegenkräfte, wobei die Differenz der auf den Abrollkolben 3 wirkenden Gegenkräfte auch den Kolben 2 gegenüber der horizontal wirkenden Kraftkomponente in einem stabilen Kräftegleichgewicht halten.

**Liste der Bezugszeichen**
- 1: Zylindergehäuse
- 2: Kolben
- 3: Abrollkolben
- 4: Rollbalg
- 5: Kolbendichtelement
- 6: oberer Feder-Dämpferraum
- 7: unterer Dämpferraum
- 8: Drosselelement
- 9: Innenraum
- 10: weiteres Drehgelenk
- 11: Aufbau des Fahrzeuges
- 12: Schwinge
- 13: Rad
- 14: Drehgelenk am Rad
- 15: Drehgelenk am Fahrzeug
- 16: Lagerfuß
- 17: Drehgelenk an der Schwinge
- 18: Pleuel
- X': Kontaktfläche am Balg
- X": Kontaktfläche am Balg

## Patentansprüche

1. Gas-Feder-Dämpfereinheit, bestehend aus einem Zylindergehäuse (1) und einem im Zylindergehäuse (1) verschiebbaren Kolben (2) mit einer Kolbenstange, wobei der Kolben (2) durch ein Kolbendichtelement (5) gegenüber dem Zylindergehäuse (1) abgedichtet ist und die Kolbenstange mit dem Zylindergehäuse (1) durch einen Rollbalg (4) verbunden ist, wodurch ein oberer Feder-Dämpferraum (6) und ein unterer Dämpferraum (7) gebildet werden, die miteinander über ein in beiden Richtungen wirkendes Drosselelement (8) Verbindung haben, wobei das Zylindergehäuse (1) einerseits mit dem Aufbau (11) zum Beispiel eines Fahrzeuges verbunden ist und der Kolben (2) andererseits über ein Drehgelenk (17) mit einer zum Rad (13) des Fahrzeuges führenden Schwinge (12) verbunden ist,
**dadurch gekennzeichnet, dass** zwischen dem Aufbau (11) des Fahrzeuges und dem Drehgelenk (17) an der Schwinge (12) ein zweites Drehgelenk (10) vorgesehen ist, beide Drehgelenke (10, 17) über ein Verbindungselement miteinander verbunden sind und der Rollbalg (4) eine solche veränderliche druckwirksame Kontaktfläche (X', X") zur Kolbenstange besitzt, die dem Kolben (2) in jeder Hubposition ein stabiles Kräftegleichgewicht garantiert.

2. Gas-Feder-Dämpfereinheit nach Anspruch 1
**dadurch gekennzeichnet, dass** das Drehgelenk (10) zwischen dem Zylindergehäuse (1)
und dem Aufbau (11) des Fahrzeuges angeordnet ist und das Zylindergehäuse (1) mit einem Stützzylinder zur äußeren Abstützung des Rollbalges (4) versehen ist und das Verbindungselement zwischen den beiden Drehgelenken (10, 17)aus dem Zylindergehäuse (1) und dem Kolben (2) mit seiner Kolbenstange besteht.

3. Gas-Feder-Dämpfereinheit nach Anspruch 1,
**dadurch gekennzeichnet, dass** das zweite Drehgelenk (10) im Kolben (2) angeordnet ist und die Kolbenstange des Kolbens (2) als ein hohlförmiger Abrollkolben (3) zur bewegungsfreien Aufnahme des weiteren Drehgelenkes (10) und des Pleuels (18) und zur Befestigung des Rollbalges (4) ausgebildet ist und das Verbindungselement zwischen den beiden Drehgelenken (10, 17) ein Pleuel (18) ist.

4. Gas-Feder-Dämpfereinheit nach Anspruch 3,
**dadurch gekennzeichnet, dass** das zweite Drehgelenk (10) im Kreuzungspunkt zwischen der Ebene des Kolbendichtelementes (5) und der Bewegungsachse des Kolbens (2) angeordnet ist.

5. Gas-Feder-Dämpfereinheit nach Anspruch 3,
**dadurch gekennzeichnet, dass** das zweite Drehgelenk (10) neben dem Kreuzungspunkt zwischen der Ebene des Kolbendichtelementes (5) und der Bewegungsachse des Kolbens (2) angeordnet ist, um ein definiertes Moment und eine entsprechende Schrägstellung des Kolbens (2) zu erzeugen.

6. Gas-Feder-Dämpfereinheit nach Anspruch 4 oder 5,
**dadurch gekennzeichnet, dass** die Lage der Gas-Feder-Dämpfereinheit so gewählt wird, dass die Tangente an die Bahnkurve des Drehgelenkes (17) in Kolbenmittelstellung parallel und nahe an der Bewegungsachse des Kolbens (2) liegt.

7. Gas-Feder-Dämpfereinheit nach Anspruch 6,
**dadurch gekennzeichnet, dass** die Schwinge (12) zur Positionierung des Drehgelenkes (17) domartig ausgebildet ist oder einen das Drehgelenk (17) tragenden Lagerfu8 (16) besitzt.

8. Gas-Feder-Dämpfereinheit nach Anspruch 7,
**dadurch gekennzeichnet, dass** der Lagerfuß (16) oder die domartige Schwinge (12) und der Abrollkolben (3) als gegenseitige Anschlagelemente ausgelegt sind, um eine gewollte Schwenkbewegung des Kolbens (2) zu erreichen.

9. Gas-Feder-Dämpfereinheit nach den Ansprüchen 1 bis 8,
**dadurch gekennzeichnet, dass** das zweite Drehgelenk (10) am Kolben (2) und/oder das Drehgelenk (17) an der Schwinge (12) räumlich ausgebildet sind.

## Claims

1. A gas spring muffler unit for a motor vehicle, consisting of a cylinder housing (1) and a piston (2) which is displaceable in the cylinder housing (1), with a piston rod, wherein the piston (2) is sealed against the cylinder housing (1) and the piston rod is connected to the cylinder housing (1) by means of a roll bellows (4), as a result of which an upper spring muffler area (6) and a lower muffler area (7) are formed which are connected to each other via a choke element (8) which acts in both directions, wherein the cylinder housing (1) is connected on the one hand with the body (11) e.g. of a motor vehicle, and the piston (2) is connected on the other hand via a pivot joint (17) to a rocker (12) which leads to the wheel (13) of the motor vehicle,
**characterized in that** between the body (11) of the motor vehicle and the pivot joint (17) on the rocker (12), a second pivot joint (10) is provided, both pivot joints (10, 17) are connected to each other via a connecting element and the roll bellows (4) has a changeable, pressure-active contact surface (X', X") to the piston rod of such a type which guarantees stable force equilibrium in every stroke position.

2. A gas spring muffler unit according to claim 1,
**characterized in that** the pivot joint (10) is arranged between the cylinder housing (1) and the body (11) of the motor vehicle, and the cylinder housing (1) is equipped with a supporting cylinder for the outer support of the roll bellows (4), and the connecting element between the two pivot joints (10, 17) consists of the cylinder housing (1) and the piston (2) with its piston rod.

3. A gas spring muffler unit according to claim 1,
**characterized in that** the second pivot joint (10) is arranged in the piston (2) and the piston rod of the piston (2) is designed as a hollow roll-off piston (3) for the movement-free retention of the further pivot joint (10) and the connection rod (18) and to affix the roll bellows (4), and the connecting element between the two pivot joints (10, 17) is a connection rod (18).

4. A gas spring muffler unit according to claim 3,
**characterized in that** the second pivot joint (10) is arranged in the cross-section point between the plane of the piston sealing element (5) and the movement axis of the piston (2).

5. A gas spring muffler unit according to claim 3,
**characterized in that** the second pivot joint (10) is arranged adjacent to the cross-section point between the plane of the piston sealing element (5) and the movement axis of the piston (2), in order to generate a defined moment and a corresponding inclination of the piston (2).

6. A gas spring muffler unit according to either of claims 4 or 5,
**characterized in that** the position of the gas spring muffler unit is selected in such a manner that the tangents on the path curve of the pivot joint (17) lies in the central piston position parallel and close to the movement axis of the piston (2).

7. A gas spring muffler unit according to claim 6,
**characterized in that** the rocker (12) is designed as a pin for positioning the pivot joint (17), or has a supporting foot (16) which supports the pivot joint (17).

8. A gas spring muffler unit according to claim 7,
**characterized in that** the supporting foot (16) or the pin-type rocker (12) and the roll-off piston (3) are designed as mutual stop elements in order to achieve a desired pivot movement of the piston (2).

9. A gas spring muffler unit according to claims 1 to 8,
**characterized in that** the second pivot joint (10) is designed spatially on the piston (2) and/or the pivot joint (17) is designed spatially on the rocker (12).

## Revendications

1. Unité amortisseur à ressort pneumatique pour un véhicule, se composant d'une enveloppe de cylindre (1) et d'un piston (2) déplaçable dans l'enveloppe de cylindre (1) avec une tige de piston, le piston (2) étant étanchéifié par un élément d'étanchéité de piston (5) relativement à l'enveloppe de cylindre (1) et la tige de piston étant reliée avec l'enveloppe de cylindre (1) par un soufflet déroulant (4), grâce à quoi un espace d'amortisseur à ressort (6) supérieur et un espace d'amortisseur (7) inférieur sont formés, lesquels sont reliés entre eux par un élément limiteur (8) agissant dans les deux sens, l'enveloppe de cylindre (1) étant reliée d'une part avec la carrosserie (11) d'un véhicule, par exemple, et le piston (2) étant relié d'autre part par une articulation pivotante (17) avec une bielle oscillante (12) conduisant à la roue (13) du véhicule,
**caractérisée en ce que**, entre la carrosserie (11) du véhicule et l'articulation pivotante (17), une deuxième articulation pivotante (10) est prévue sur la bielle oscillante (12), **en ce que** les deux articulations pivotantes (10, 17) sont reliées entre elles par un élément de liaison et **en ce que** le soufflet déroulant (4) possède vers la tige de piston une surface de contact (X', X") comprimante modifiable, telle qu'un équilibre de forces stable est garanti pour le piston (2) dans chaque position de course.

2. Unité amortisseur à ressort pneumatique selon la revendication 1
**caractérisée en ce que** l'articulation pivotante (10) est disposée entre l'enveloppe de cylindre (1) et la carrosserie (11) du véhicule, et **en ce que** l'enveloppe de cylindre (1) est prévue avec un cylindre d'appui pour le soutien extérieur du soufflet déroulant (4), et **en ce que** l'élément de raccordement entre les deux articulations pivotantes (10, 17) se compose de l'enveloppe de cylindre (1) et du piston (2) avec sa tige de piston.

3. Unité amortisseur à ressort pneumatique selon la revendication 1,
**caractérisée en ce que** la deuxième articulation pivotante (10) est disposée dans le piston (2), et **en ce que** la tige du piston (2) est formée comme un piston déroulant (3) creux pour l'accueil avec liberté de mouvement de l'autre articulation pivotante (10) et de la bielle (18) et pour la fixation du soufflet déroulant (4), et **en ce que** l'élément de raccordement entre les deux articulations pivotantes (10, 17) est une bielle.

4. Unité amortisseur à ressort pneumatique selon la revendication 3,
**caractérisée en ce que** la deuxième articulation pivotante (10) est disposée au point de croisement entre le plan de l'élément d'étanchéité de piston (5) et l'axe de mouvement du piston (2).

5. Unité amortisseur à ressort pneumatique selon la revendication 3,
**caractérisée en ce que** la deuxième articulation pivotante (10) est disposée à côté du point de croisement entre le plan de l'élément d'étanchéité de piston (5) et de l'axe de mouvement du piston (2), afin de générer un couple défini et une inclinaison correspondante du piston (2).

6. Unité amortisseur à ressort pneumatique selon la revendication 4 ou 5,
**caractérisée en ce que** la position de l'unité amortisseur à ressort pneumatique est choisie de telle sorte que la tangente à la trajectoire de l'articulation pivotante (17) dans la position du milieu du piston est parallèle et proche de l'axe de mouvement du piston (2).

7. Unité amortisseur à ressort pneumatique selon la revendication 6,
**caractérisée en ce que** la bielle oscillante (12) pour le positionnement de l'articulation pivotante (17) est formée en épine ou possède un pied (16) supportant l'articulation pivotante (17).

8. Unité amortisseur à ressort pneumatique selon la revendication 7,
**caractérisée en ce que** le pied (16) ou la bielle oscillante (12) en épine et le piston de déroulage (3) sont conçus comme éléments de butée opposés, afin d'obtenir un mouvement oscillant souhaité du piston (2).

9. Unité amortisseur à ressort pneumatique selon les revendications 1 à 8,
**caractérisée en ce que** la deuxième articulation pivotante (10) sur le piston (2) et/ou l'articulation pivotante (17) sur la bielle oscillante (12) sont formées de façon spatiale.
